# EUROPEAN PATENT APPLICATION

(11) **EP 3 575 726 A1**
(43) Date of publication of application: **04.12.2019**
(21) Application number: 19168996.7
(22) Date of filing: 12.04.2019
(51) Int. Cl.: F28D 9/00, B01D 1/00, C02F 1/08, F28B 9/08, F28F 3/04, F28F 17/00

(54) **A PLATE HEAT EXCHANGER FOR A DESALINATION SYSTEM**

(30) Priority: 30.05.2018 DK PA201800240
(71) Applicant: Danfoss A/S, 6430 Nordborg (DK)
(72) Inventor: SØNDERGAARD, Aage, 6430 Nordborg (DK)
(74) Representative: Inspicos P/S

(57) **Abstract**

A plate (1) for a plate heat exchanger (12) for use in a system (9) for concentration of substances in water is disclosed. A heat exchanging area (2) defines a plurality of first channels on a first surface of the plate (1) and a plurality of second channels on a second surface of the plate (1). A first through-going hole (3) is positioned at a first end of the heat exchanging area (2), the first through-going hole (3) establishing a vapour inlet for the plurality of first channels; a second through-going hole (4) is positioned at a second end of the heat exchanging area (2), the second through-going hole (4) establishing a vapour outlet for the plurality of second channels; at least one third through-going hole (5) is positioned at the first end of the heat exchanging area (2), the at least one third through-going hole (5) establishing a fluid inlet for the plurality of second channels; and at least one fourth through-going hole (6) is positioned at the second end of the heat exchanging area (2), the at least one fourth through-going hole (6) establishing a fluid outlet for the plurality of first channels. The second through-going hole (4) forms part of a collection chamber for collecting concentrate.

## Description

### FIELD OF THE INVENTION

The present invention relates to a plate for a plate heat exchanger for use in a system for concentration of substances, e.g. a desalination system. The present invention further relates to a plate heat exchanger comprising such a plate and to a system comprising such a plate heat exchanger.

### BACKGROUND OF THE INVENTION

It is sometimes desirable to concentrate substances in water, e.g. in the form of inorganic substances, such as salts. This could, e.g., be in order to remove such substances from the water, for instance with the purpose of performing desalination of seawater. As part of the process, the water may be heated, for instance using vapour compression technology in which a fluid medium is alternatingly compressed and expanded and heat exchange takes place between the fluid medium and the water. The fluid medium being alternatingly compressed and expanded may be a part of the water.

Using vapour compression technology in systems for concentrating substances in water is, e.g., disclosed in 'George V. Gsell, et al., Advances in Vapor Compression Technology for the Production of USP Purified Water and Water For Injection, Pharmaceutical Engineering, March/April 2013, Vol. 33, No. 2, pp 1-8'.

In prior art systems for concentration of substances in which vapour compression technology is used, and in which a plate heat exchanger is used for exchanging heat between the fluid medium being alternatingly compressed and expanded and the water, the plate heat exchanger is normally positioned in a closed tank or container, and one of the heat exchanging media is supplied to the heat exchanger from the tank, at an open end of the plate heat exchanger, and exits the plate heat exchanger from an opposite open end, into the tank. This makes it difficult to use the plate heat exchanger without a large and complicated system.

### DESCRIPTION OF THE INVENTION

It is an object of embodiments of the invention to provide a plate for a plate heat exchanger which ensures an even distribution of water across the plate during heat transfer.

It is a further object of embodiments of the invention to provide a plate heat exchanger which can be readily installed in a system for concentration of substances.

It is an even further object of embodiments of the invention to provide a plate heat exchanger which can be used for concentration of substances in water as a separate unit.

According to a first aspect the invention provides a plate for a plate heat exchanger for use in a system for concentration of substances in water, the plate comprising:
- a heat exchanging area defining a plurality of first channels on a first surface of the plate and a plurality of second channels on a second surface of the plate, the second surface being arranged opposite to the first surface,
- a first through-going hole positioned at a first end of the heat exchanging area, the first through-going hole establishing a vapour inlet for the plurality of first channels,
- a second through-going hole positioned at a second end of the heat exchanging area, the second through-going hole establishing a vapour outlet for the plurality of second channels,
- at least one third through-going hole positioned at the first end of the heat exchanging area, the at least one third through-going hole establishing a fluid inlet for the plurality of second channels, and
- at least one fourth through-going hole positioned at the second end of the heat exchanging area, the at least one fourth through-going hole establishing a fluid outlet for the plurality of first channels,
wherein the second through-going hole forms part of a collection chamber for collecting concentrate.

Thus, according to the first aspect, the invention provides a plate for a plate heat exchanger. The plate heat exchanger is for use in a system for concentration of substances in water. The substances being concentrated are preferably inorganic substances, such as a salt. In the present context the term 'concentration of substances' should be interpreted to mean that a concentration of a substance which is present in the water is increased. Thereby water in which the substance has been removed or the concentration thereof has been decreased is also obtained. For instance, the system for concentration of substances in water could be a desalination system, for instance for performing desalination of seawater. In desalination systems the original seawater is divided into fresh water and water with a higher salt concentration that the original seawater, e.g. in the form of brine. The process of concentrating the substances may include distillation of the water.

The plate comprises a heat exchanging area defining a plurality of first channels on a first surface of the plate and a plurality of second channels on a second surface of the plate. The second surface is arranged opposite to the first surface. Thereby heat exchange can take place between fluid flowing in the plurality of first channels and fluid flowing in the plurality of second channels, via the plate. It should be noted that the plurality of first channels and/or the plurality of second channels are not necessarily closed until the plate is positioned adjacent to another plate of the plate heat exchanger. Accordingly, the channels may be formed as grooves or undulations on the surfaces.

The plate further comprises a first through-going hole positioned at a first end of the heat exchanging area. In the present context the term 'through-going hole' should be interpreted to mean a hole formed in the plate from the first surface to the second surface, thereby allowing passage through the plate.

The first through-going hole establishes a vapour inlet for the plurality of first channels. Accordingly, the first through-going hole is fluidly connected to each of the plurality of first channels, and thereby fluid medium in the form of vapour can be supplied to the plurality of first channels, from the first through-going hole. Thus, fluid medium in the form of vapour enters the plurality of first channels, flows along the first surface of the plate and forms the hot side of the heat exchanger.

The plate further comprises a second through-going hole positioned at a second end of the heat exchanging area. Thus, the second through-going hole is positioned at an end of the heat exchanging area which is opposite to the end where the first through-going hole is positioned.

The second through-going hole establishes a vapour outlet for the plurality of second channels. Accordingly, each of the plurality of second channels is fluidly connected to the second through-going hole, and thereby fluid medium in the form of vapour can leave the plurality of second channels, via the second through-going hole. Preferably, the fluid medium leaving the plurality of second channels is partly in the form of vapour, and partly in the form of concentrate in liquid form, e.g. brine. The fluid medium flowing in the plurality of first channels, along the second surface, forms the cold side of the heat exchanger.

Furthermore, the plate comprises at least one third through-going hole positioned at the first end of the heat exchanging area. Thus, the at least one third through-going hole is positioned at the same end of the heat exchanging area as the first through-going hole. The at least one third through-going hole establishes a fluid inlet for the plurality of second channels. Accordingly, the second channels are fluidly connected, at the first end of the heat exchanging area, to the at least one third through-going hole, and, at the second end of the heat exchanging area, to the second through-going hole. Thus, fluid medium forming the cold side of the heat exchanger enters the plurality of second channels from the at least one third through-going hole, flows in the plurality of second channels along the second surface of the plate in the heat exchanging area and leaves the plurality of second channels, via the second through-going hole, in the form of a vapour or a mixture of vapour and concentrate in liquid form. While the fluid medium flows along the second surface of the plate, heat exchange takes place with the fluid medium flowing in the plurality of first channels, along the first surface of the plate, in such a manner that the fluid medium flowing in the plurality of second channels is heated. In the case that the fluid medium entering the plurality of second channels from the at least one third through-going hole is in a liquid state, the heat transfer to the fluid medium should be sufficient to provide at least partial phase change of the fluid medium, thereby ensuring that the fluid medium leaving the plurality of second channels via the second through-going hole is at least partly in the form of vapour.

Finally, the plate comprises at least one fourth through-going hole positioned at the second end of the heat exchanging area. Thus, the at least one fourth through-going hole is positioned at the same end of the heat exchanging area as the second through-going hole. The at least one fourth through-going hole establishes a fluid outlet for the plurality of first channels. Accordingly, the plurality of first channels are connected, at the first end of the heat exchanging area, to the first through-going hole, and, at the second end of the heat exchanging area, to the at least one fourth through-going hole. Thus, fluid medium forming the hot side of the heat exchanger enters the plurality of first channels from the first through-going hole, in the form of vapour, flows in the plurality of first channels along the first surface of the plate in the heat exchanging area and leaves the plurality of first channels, via the at least one fourth through-going hole. While the fluid medium flows along the first surface of the plate, heat exchange takes place with the fluid medium flowing in the plurality of second channels, along the second surface of the plate, in such a manner that the fluid medium flowing in the plurality of first channels is cooled, preferably sufficiently to condense the vapour entering the plurality of first channels. In this case the fluid medium leaving the plurality of first channels via the at least one fourth through-going hole is at least partly in liquid form.

The second through-going hole forms part of a collection chamber for collecting concentrate. Thereby the fluid medium leaving the plurality of second channels via the second through-going hole is immediately received in the collecting chamber. Thereby the collecting chamber forms part of the heat exchanger. Furthermore, the heat exchanger is self-contained in the sense that the heat exchange and the collection of concentrate takes place within the heat exchanger, and therefore there is no need for positioning the heat exchanger inside a tank or container. This makes the heat exchanger suitable for use in any kind of system for concentration of substances, and the heat exchanger can be used as a separate unit.

As described above, the fluid medium which leaves the plurality of second channels via the second trough-going hole is at least partly in the form of vapour. Preferably, the fluid medium is partly in the form of vapour with a low concentration of the substance, and partly in liquid form with a high concentration of the substance, e.g. in the form of brine. The vapour is then separated from the liquid in the collecting chamber, and thereby the liquid with a high concentration of the substance is collected in the collecting chamber.

A cross sectional dimension of each of the first and second through-going holes may be significantly larger than a cross sectional dimension of each of the third and fourth through-going holes. According to this embodiment, the through-going holes which establish vapour inlets and outlets are significantly larger than the other through-going holes.

Thus, fluid medium in the form of vapour can enter the plurality of first channels via the large first through-going hole and leave the plurality of first channels in liquid form via the smaller at least one fourth through-going hole. The volume of fluid medium in vapour form is larger than the volume of the same amount of fluid medium in liquid form. By using a large through-going hole for the vapour inlet and at least one smaller through-going hole for the liquid outlet it is ensured that the flow of fluid medium through the plurality of first channels is sufficient to ensure that the vapour is properly condensed while the fluid medium passes through the plurality of first channels.

Similarly, fluid medium in the form of liquid can enter the plurality of second channels via the small at least one third through-going hole and leave the plurality of second channels at least partly in the form of vapour via the larger second through-going hole. Thereby it is ensured that the flow of fluid medium through the plurality of second channels is sufficient to ensure that the liquid is evaporated while the fluid medium passes through the plurality of second channels, while preventing that all of the liquid evaporates and leaves the second channels dry.

For instance, the cross sectional dimension of each of the first and second through-going holes may be between 2 and 10 times larger than the cross sectional dimension of each of the third and fourth through-going holes, such as between 3 and 8 times larger, such as between 4 and 6 times larger.

The plate may further comprise distributing guides arranged between the third through-going hole(s) and the second channels for distributing liquid from the third through-going hole(s) among the second channels.

According to this embodiment, the distributing guides ensure that liquid fluid medium received via the at least one third through-going hole is properly distributed among the second channels, preferably in such a manner that an even distribution of fluid medium among the plurality of second channels is obtained. Thereby an appropriate distribution of fluid medium across the second surface of the plate is obtained. Thereby a good heat transfer through the plate is obtained.

The distributing guides may, e.g., be in the form of deflectors or wall parts arranged in a flow passage interconnecting the at least one third through-going hole and the second channels.

Similarly, the plate may further comprise colleting guides arranged between the first channels and the fourth through-going hole(s) for guiding liquid from the first channels towards the fourth through-going hole(s). According to this embodiment, it is ensured that the fluid medium which has condensed while passing through the first channels is properly collected via the at least one fourth through-going hole. The collecting guides may also be in the form of deflectors or wall parts arranged in a flow passage interconnecting the first channels and the at least one fourth through-going hole.

The plurality of first channels and the plurality of second channels may be formed by an undulating pattern of the heat exchanging area of the plate. According to this embodiment the plurality of first channels and the plurality of second channels are not closed until the plate is arranged adjacent to another identical plate.

According to a second aspect the invention provides a plate heat exchanger for use in a system for concentration of substances in water, the plate heat exchanger comprising at least two plates according to the first aspect of the invention, wherein the first, second, third and fourth through-going holes of the plates are respectively interconnected to form supply channels and collecting channels of the plurality of first and second channels, respectively.

The plate heat exchanger according to the second aspect of the invention comprises at least two plates according to the first aspect of the invention. The remarks set forth above are therefore equally applicable here.

The plates are assembled in such a manner that the first through-going holes of all of the plates are interconnected to form a supply channel to the first channels of the plates. Similarly, the second through-going holes of all of the plates are interconnected to form a collecting channel for the second channels of the plates. Furthermore, the third through-going holes of the plates are interconnected to each other in such a manner that one or more supply channels to the second channels of the plates is/are formed. Similarly, the fourth through-going holes of the plates are interconnected to each other in such a manner that one or more collecting channels for the first channels of the plates is/are formed. The supply channels and collecting channels formed in this manner may function as manifolds for the first and second channels.

As described above, the plurality of first channels and the plurality of second channels may be formed between two adjacent plates.

The plurality of first channels may form a hot side of the plate heat exchanger and the plurality of second channels may form a cold side of the plate heat exchanger. This has already been described above.

The second through-going holes of the plates may be interconnected to form a collection chamber for collecting concentrate. According to this embodiment, the collection chamber is completely accommodated in the plate heat exchanger. Accordingly, a separate collection chamber is not required, and it is not necessary to position the plate heat exchanger inside a tank or container. This allows the plate heat exchanger to be used as an independent unit for concentration of substances, and not only as a part of a large and/or complicated system.

The plurality of second channels may be arranged to operate as a free falling film evaporator. According to this embodiment, the fluid medium flowing in the plurality of second channels moves under the action of gravity as a continuous film, while undergoing evaporation. The film is normally very thin, and this makes it easier to ensure evaporation of the fluid medium, due to the small surface area. Furthermore, the thin layer of fluid medium allows the vapour to leave the plurality of second channels.

According to a third aspect the invention provides a system for concentration of substances in water, the system comprising a compressor, a separator and at least one plate heat exchanger according to the second aspect of the invention, wherein an outlet of the compressor is fluidly connected to the first through-going holes of the plates the plate heat exchanger, and the second through-going holes of the plates of the plate heat exchanger are fluidly connected to an inlet of the separator.

The system according to the third aspect of the invention comprises at least one plate heat exchanger according to the second aspect of the invention. The remarks set forth above are therefore equally applicable here.

The system according to the third aspect of the invention is a system for concentration of substances in water. As described above, the substances could, e.g., be inorganic substances, such as salts.

The system comprises a compressor, a separator and at least one plate heat exchanger according to the second aspect of the invention. Accordingly, the system applies vapour compression technology.

An outlet of the compressor is fluidly connected to the first through-going holes of the plates of the plate heat exchanger. Accordingly, compressed fluid medium from the compressor is supplied to the first through-going holes of the plates, and thereby to the first channels of the plate heat exchanger.

The second through-going holes of the plates of the plate heat exchanger are fluidly connected to an inlet of the separator. Accordingly, the fluid medium in vapour form which leaves the second channels of the plate heat exchanger via the second through-going holes of the plates is supplied to the separator. In the separator the fluid medium is separated into a gaseous part and a liquid part, the liquid part forming the collected concentrate.

The separator may, e.g., form part of the collecting chamber formed by the second through-going holes of the plates. Thereby the fluid medium can be separated into a gaseous part and a liquid part directly in the collecting chamber, and a separate separator is not required.

The separator may comprise a gaseous outlet and a liquid outlet, and the gaseous outlet of the separator may be fluidly connected to an inlet of the compressor. According to this embodiment, the gaseous part of the fluid medium received in the separator is supplied to the compressor where it is compressed before being supplied to the plurality of first channels via the first through-going holes of the plates. Thereby the same medium is supplied to the hot side and the cold side of the plate heat exchanger. This will be described in further detail below.

The system may be a desalination system and the collected concentrate may be a brine. In this case the substance being concentrated is NaCI salt. As an alternative, other kinds of substances may be concentrated, e.g. other kinds of salt and/or other kinds of inorganic or organic substances.

The fourth through-going holes of the plates of the plate heat exchanger may be fluidly connected to a freshwater tank. According to this embodiment water with a low concentration of the substrate is collected in the freshwater tank.

The system according to the third aspect of the invention may advantageously operate in the following manner. Water containing the substrate to be concentrated is drawn into the system and supplied to the plurality of second channels of the plate heat exchanger via the third through-going holes of the plates. The water could, e.g., be seawater which is supposed to be desalinated.

While the water passes through the plurality of second channels, heat exchange takes place in such a manner that the water passing through the second channels is heated. This causes at least partial phase change to take place, and thereby fluid medium in vapour form leaves the plurality of second channels via the second through-going holes of the plates. The vapour leaving the plurality of second channels is collected in a collecting chamber formed by the second through-going holes of the plates.

The collected fluid medium is supplied to the separator where it is separated into a liquid part and a gaseous part. The liquid part contains a higher concentration of the substance to be concentrated than the water which was originally supplied to the second channels, and the gaseous part contains a lower concentration of the substance. The liquid part may be supplied to a reservoir or it may be disposed of.

The gaseous part of the water contained in the separator is supplied to the compressor where it is compressed before being supplied, in the form of vapour, to the plurality of first channels via the first through-going holes of the plates.

While the water passes through the plurality of first channels, heat exchange takes place with the water flowing in the second channels in such a manner that the water vapour passing through the first channels is cooled. This causes the vapour to at least partially condense, and thereby liquid water leaves the plurality of first channels via the fourth through-going holes of the plates. Since the gaseous water supplied to the compressor from the separator contains a lower concentration of the substance than the water which was originally supplied to the plurality of second channels of the plate heat exchanger, this is also the case for the liquid water leaving the first channels via the fourth through-going holes of the plates. For instance, this water may be in the form desalinated water, i.e. freshwater. The freshwater may then be supplied to a freshwater tank.

The system may comprise two or more plate heat exchangers arranged in series. Thereby the concentration of the substance in the water leaving the first channels of the heat exchangers decreases for each passage through a heat exchanger. In this case vapour from one plate heat exchanger may be supplied to the vapour inlet of the next plate heat exchanger without being compressed by a compressor.

The plate according to the first aspect of the invention and/or the plate heat exchanger according to the second aspect of the invention may also be used in a system for concentration of substances in water which does not include a compressor. For instance, in a system arranged in the vicinity of a plant which produces surplus heat, e.g. a power plant. In this case the hot side of the plate heat exchanger (or the first plate heat exchanger in the case that the system comprises two or more plate heat exchangers arranged in series) receives hot surplus heat fluid medium.

### BRIEF DESCRIPTION OF THE DRAWINGS

The invention will now be described in further detail with reference to the accompanying drawings in which
Fig. 1 is a side view of a plate for a plate heat exchanger according to an embodiment of the invention,
Fig. 2 is a diagrammatic view of a system according to a first embodiment of the invention,
Fig. 3 is a diagrammatic view of a system according to a second embodiment of the invention, and
Fig. 4 is a perspective view of a part of a system according to an embodiment of the invention.

### DETAILED DESCRIPTION OF THE DRAWINGS

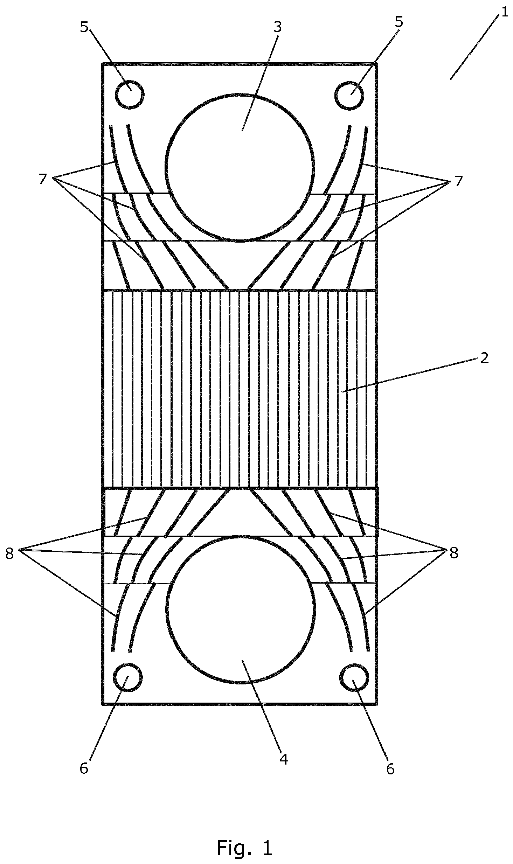

Fig. 1 is a side view of a plate 1 for a plate heat exchanger according to an embodiment of the invention. The plate 1 comprises a heat exchanging area 2 with a plurality of first channels and a plurality of second channels arranged in the heat exchanging area 2, on opposing sides of the plate 1. Thereby heat exchange can take place between fluid medium flowing in the plurality of first channels, along a first surface of the plate 1, and fluid medium flowing in the plurality of second channels, along a second surface of the plate 1.

The plurality of first channels and the plurality of second channels may be formed by undulations of valleys and crests formed in the plate 1, and they may be closed when the plate 1 is positioned adjacent to another identical plate 1 when the plate heat exchanger is assembled.

A first through-going hole 3 is formed in the plate 1 at a first end of the heat exchanging area 2. The first through-going hole 3 is fluidly connected to each of the first channels and thereby establishes a vapour inlet for the plurality of first channels. Accordingly, vapour may flow through the first through-going hole 3, and may be supplied to each of the first channels therefrom.

A second through-going hole 4 is formed in the plate 1 at a second end of the heat exchanging area 2. The second end is arranged opposite to the first end, where the first through-going hole 3 is arranged, with respect to a flow direction defined by the plurality of first channels and the plurality of second channels. The second through-going hole 4 is fluidly connected to each of the second channels and thereby establishes a vapour outlet for the plurality of second channels. Accordingly, vapour flowing through the plurality of second channels may leave the second channels via the second through-going hole 4 and may be collected there.

Two third through-going holes 5 are formed in the plate 1 at the first end of the heat exchanging area 2. The third through-going holes 5 are fluidly connected to each of the second channels and thereby establish a fluid inlet for the plurality of second channels. Accordingly, fluid medium, preferably in liquid form, may enter the second channels from the third through-going holes 5. The fluid medium may then pass through the second channels along the second surface of the plate 1 in the heat exchanging area 2, while heat exchange takes place with a fluid medium flowing in the first channels along the first surface of the plate 1, in such a manner that the fluid medium flowing in the second channels is heated, thereby causing the fluid medium to at least partly evaporate. The fluid medium, in the form of vapour, may then leave the plurality of second channels via the second through-going hole 2.

Two fourth through-going holes 6 are formed in the plate 1 at the second end of the heat exchanging area 2. The fourth through-going holes 6 are fluidly connected to each of the first channels and thereby establish a fluid outlet for the plurality of first channels. Accordingly, fluid medium in vapour form may enter the first channels from the first through-going hole 3. The fluid medium may then pass through the first channels along the first surface of the plate 1 in the heat exchanging area 2, while heat exchange takes place with a fluid medium flowing in the second channels along the second surface of the plate 1, in such a manner that the fluid medium flowing in the first channels is cooled, thereby causing the fluid medium to at least partly condense. The fluid medium, in the form of liquid, may then leave the plurality of first channels via the fourth through-going holes 6.

The fluid connections between the through-going holes 3, 4, 5, 6 and the respective first and second channels may be established by applying sealing at appropriate positions along the first and second surfaces of the plate 1.

The first through-going hole 3 and the second through-going hole 4 have a significantly larger cross sectional diameter than the cross sectional diameter of the third through-going holes 5 and the fourth through-going holes 6. This is an advantage because vapour flows through the first through-going hole 3 and the second through-going hole 4, while liquid flows through the third through-going holes 5 and the fourth through-going holes 6, and because the volume of a fluid medium in vapour form is larger than the volume of the same amount of fluid medium in liquid form. By suitably designing the cross sectional diameters of each of the through-going holes 3, 4, 5, 6, it can be ensured that the fluid medium condenses/evaporates appropriately while flowing through the plurality of first/second channels.

A number of distributing guides 7 are arranged between the third through-going holes 5 and the plurality of second channels. The distributing guides 7 ensure that fluid medium from the third through-going holes 5 is properly distributed among the plurality of second channels. Thereby the fluid medium is distributed across the entire width of the heat exchanging area 2, and the entire heat exchanging area 2 is used for the heat exchange, and efficient heat transfer is obtained.

Similarly, a number of collecting guides 8 are arranged between the plurality of first channels and the fourth through-going holes 6. The collecting guides 8 ensure that the fluid medium leaving the second channels is appropriately collected in the fourth through-going holes 6.

The second through-going hole 4 forms part of a collecting chamber for collecting concentrate. Accordingly, when the plate 1 is positioned adjacent to another identical plate 1 in an assembled plate heat exchanger, the second through-going holes 4 of the plates 1 are joined to each other to form a chamber. In this chamber the vapour received from the plurality of second channels of each of the plates 1 is collected.

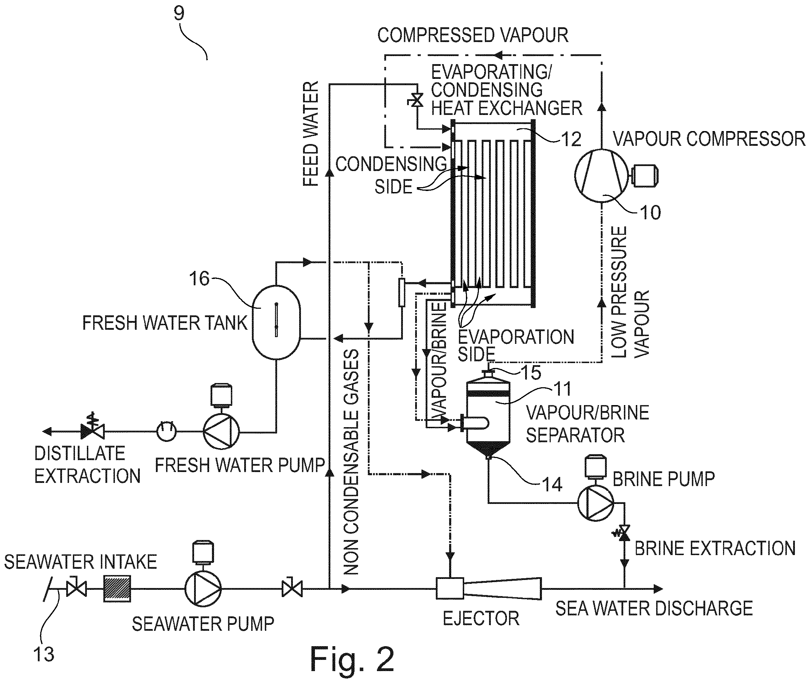

Fig. 2 is a diagrammatic view of a system 9 for concentration of substances in water according to a first embodiment of the invention. The system 9 of Fig. 2 is a desalination system in which the substance being concentrated is NaCI salt. However, the system 9 could alternatively be used for concentrating other kinds of substances, such as other kinds of salt.

The system 9 comprises a compressor 10, a separator 11 and a plate heat exchanger 12, and the system 9 thereby uses vapour compression technology. The plate heat exchanger 12 comprises a number of plates according to an embodiment of the invention, e.g. the plate 1 of Fig. 1.

The system 9 may operate in the following manner. Seawater is introduced in the system 9 via seawater intake 13 and supplied to the cold side of the plate heat exchanger 12. More particularly, the seawater is supplied to a manifold formed by third through-going holes formed in the plates of the plate heat exchanger 12, and from there distributed among a plurality of second channels.

As the seawater passes through the plate heat exchanger 12 in the plurality of second channels it is heated, and thereby at least partly evaporated, due to heat exchange with fluid medium flowing in first channels of the plate heat exchanger 12. As a consequence, a mixture of vapour and brine leaves the plate heat exchanger 12 via second through-going holes formed in the plates. The mixture of vapour and brine is supplied to the separator 11, where it is separated into a liquid part and a gaseous part. The liquid part, i.e. the brine, has a concentration of NaCI salt which is higher than the concentration of NaCl salt of the original seawater, and the gaseous part has as concentration of NaCl salt which is lower than the concentration of NaCl salt of the original seawater.

From the separator 11, the brine is discharged to the sea via liquid outlet 14. The gaseous part is supplied to the compressor 10 via gaseous outlet 15. In the compressor 15, the vapour is compressed and subsequently supplied to the hot side of the plate heat exchanger 12. More particularly, the vapour is supplied to a manifold formed by first through-going holes formed in the plates of the plate heat exchanger 12, and from there distributed among a plurality of first channels.

As the vapour passes through the plate heat exchanger 12 in the plurality of first channels it is cooled, and thereby at least partly condensed, due to heat exchange with the seawater flowing in the second channels, as described above. As a consequence, the fluid medium leaving the plurality of first channels via fourth through-going holes formed in the plates is at least partly in liquid form. This liquid water has a concentration of NaCl salt which is lower than the concentration of NaCl salt of the original seawater, i.e. it has been desalinated. The desalinated water is supplied to a freshwater tank 16, where it is collected for further use.

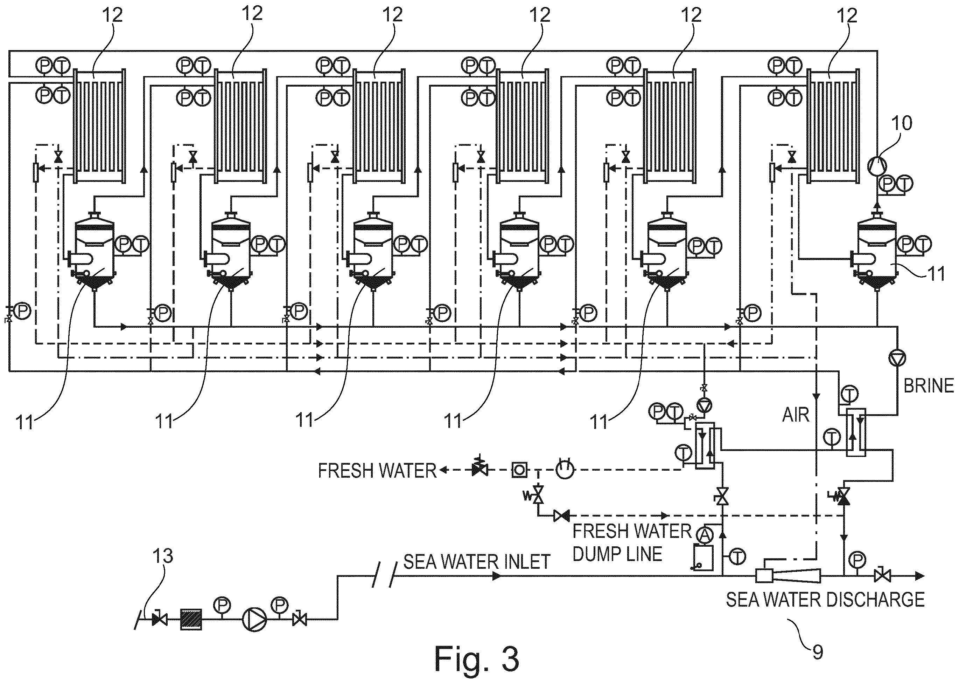

Fig. 3 is a diagrammatic view of a system 9 for concentration of substances in water according to a second embodiment of the invention. The system 9 of Fig. 3 is very similar to the system 9 of Fig. 2, and it will therefore not be described in detail here. However, the system 9 of Fig. 3 comprises six plate heat exchangers 12 connected fluidly in series, each being connected to a separator 11 in the manner described above with reference to Fig. 2. Thus, condensed water leaving the hot side of one plate heat exchanger 12 is supplied to the cold side of the next plate heat exchanger 12, and vapour from one separator 11 is supplied to the hot side of the next plate heat exchanger 12. Thereby the concentration of NaCl salt in the water is decreased for each passage through a plate heat exchanger 12, and eventually water with a very low concentration of NaCl salt is obtained.

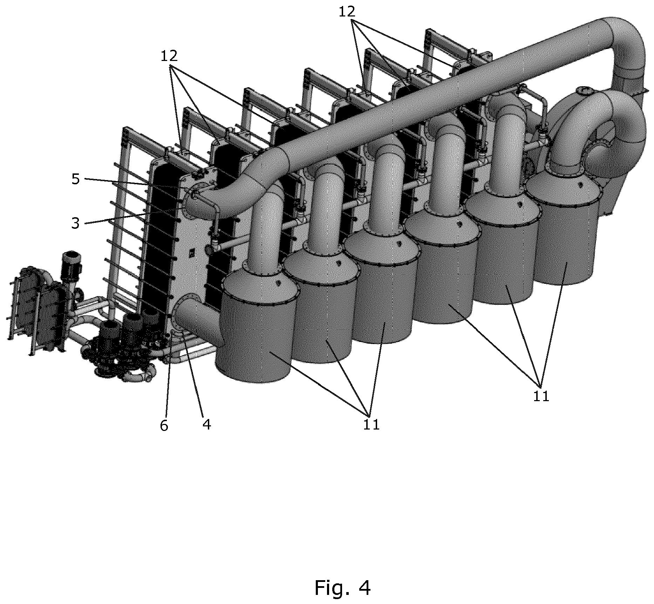

Fig. 4 is a perspective view of a part of a system 9 for concentration of substances in water according to an embodiment of the invention. The system 9 comprises six plate heat exchangers 12 arranged fluidly in series, and the system 9 of Fig. 4 could, thus, be the system 9 shown in Fig. 3 and described in detail above.

In Fig. 4 the plate heat exchangers 12 and the separators 11 are clearly seen. It is also clear that the first through-going holes 3 and the second through-going holes 4 formed in the plates of the plate heat exchangers 12 have a cross sectional diameter which is significantly larger than a cross sectional diameter of the third through-going holes 5 and the fourth through-going holes 6 formed in the plates.

## Claims

1. A plate (1) for a plate heat exchanger (12) for use in a system (9) for concentration of substances in water, the plate (1) comprising:
- a heat exchanging area (2) defining a plurality of first channels on a first surface of the plate (1) and a plurality of second channels on a second surface of the plate (1), the second surface being arranged opposite to the first surface,
- a first through-going hole (3) positioned at a first end of the heat exchanging area (2), the first through-going hole (3) establishing a vapour inlet for the plurality of first channels,
- a second through-going hole (4) positioned at a second end of the heat exchanging area (2), the second through-going hole (4) establishing a vapour outlet for the plurality of second channels,
- at least one third through-going hole (5) positioned at the first end of the heat exchanging area (2), the at least one third through-going hole (5) establishing a fluid inlet for the plurality of second channels, and
- at least one fourth through-going hole (6) positioned at the second end of the heat exchanging area (2), the at least one fourth through-going hole (6) establishing a fluid outlet for the plurality of first channels,
wherein the second through-going hole (4) forms part of a collection chamber for collecting concentrate.

2. A plate (1) according to claim 1, wherein a cross sectional dimension of each of the first (3) and second (4) through-going holes is significantly larger than a cross sectional dimension of each of the third (5) and fourth (6) through-going holes.

3. A plate (1) according to claim 2, wherein the cross sectional dimension of each of the first (3) and second (4) through-going holes is between 2 and 10 times larger than the cross sectional dimension of each of the third (5) and fourth (6) through-going holes.

4. A plate (1) according to any of the preceding claims, further comprising distributing guides (7) arranged between the third through-going hole(s) (5) and the second channels for distributing liquid from the third through-going hole(s) (5) among the second channels.

5. A plate (1) according to any of the preceding claims, further comprising colleting guides (8) arranged between the first channels and the fourth through-going hole(s) (6) for guiding liquid from the first channels towards the fourth through-going hole(s) (6).

6. A plate (1) according to any of the preceding claims, wherein the plurality of first channels and the plurality of second channels are formed by an undulating pattern of the heat exchanging area (2) of the plate (1).

7. A plate heat exchanger (12) for use in a system (9) for concentration of substances in water, the plate heat exchanger (12) comprising at least two plates (1) according to any of the preceding claims, wherein the first (3), second (4), third (5) and fourth (6) through-going holes of the plates (1) are respectively interconnected to form supply channels and collecting channels of the plurality of first and second channels, respectively.

8. A plate heat exchanger (12) according to claim 7, wherein the plurality of first channels form a hot side of the plate heat exchanger (12) and the plurality of second channels form a cold side of the plate heat exchanger (12).

9. A plate heat exchanger (12) according to claim 7 or 8, wherein the second through-going holes (4) of the plates (1) are interconnected to form a collection chamber for collecting concentrate.

10. A plate heat exchanger (12) according to any of claims 7-9, wherein the plurality of second channels are arranged to operate as a free falling film evaporator.

11. A system (9) for concentration of substances in water, the system (9) comprising a compressor (10), a separator (11) and at least one plate heat exchanger (12) according to any of claims 7-10, wherein an outlet of the compressor (10) is fluidly connected to the first through-going holes (3) of the plates (1) the plate heat exchanger (12), and the second through-going holes (4) of the plates (1) of the plate heat exchanger (12) are fluidly connected to an inlet of the separator (11).

12. A system (9) according to claim 11, wherein the separator (11) comprises a gaseous outlet (15) and a liquid outlet (14), and wherein the gaseous outlet (15) of the separator (11) is fluidly connected to an inlet of the compressor (10).

13. A system (9) according to claim 11 or 12, wherein the system (9) is a desalination system and the collected concentrate is a brine.

14. A system (9) according to any of claims 11-13, wherein the fourth through-going holes (6) of the plates (1) of the plate heat exchangers (12) are fluidly connected to a fresh water tank (16).
